# EUROPÄISCHE PATENTSCHRIFT

(11) **EP 1 063 763 B1**
(45) Veröffentlichungstag und Bekanntmachung des Hinweises auf die Patenterteilung: **17.09.2003**
(21) Anmeldenummer: 00810533.0
(22) Anmeldetag: 19.06.2000
(51) Int. Cl.: H02P 9/08

(54) **Kraftwerksanlage mit einer Gasturbine sowie Verfahren zu deren Betrieb**
Power plant with a gas turbine and method for operating the same
Centrale électrique avec une turbine à gaz et méthode pour l'exploitation de celle-ci

(30) Priorität: 23.06.1999 DE 19928711
(43) Veröffentlichungstag der Anmeldung: 27.12.2000
(73) Patentinhaber: ALSTOM (Switzerland) Ltd, 5401 Baden (CH)
(72) Erfinder: Schlett, Hans-Werner, 79761 Waldshut (DE)

(56) Entgegenhaltungen:
- GATTI E ET AL: "DIGITAL CONTROL OF LOAD COMMUTATED INVERTERS FOR STARTING EQUIPMENTOF GAS TURBINE POWER STATIONS" PROCEEDINGS OF THE EUROPEAN CONFERENCE ON POWER ELECTRONICS AND APPLICATIONS,GB,LONDON, IEE, Bd. CONF. 5, 13. September 1993 (1993-09-13), Seiten 250-255, XP000470850
- DENESDI L: "STATIC STARTING OF GAS TURBINES" ABB REVIEW,CH,ABB ASEA BROWN BOVERI, ZURICH, Nr. 3, 1992, Seiten 33-38, XP000304702 ISSN: 1013-3119
- POULIQUEN J L ET AL: "LE DEMARRAGE DES GROSSES MACHINES SYNCHRONES PAR CONVERTISSEUR STATIQUE DE FREQUENCE" REVUE GENERALE DE L'ELECTRICITE,FR,RGE. PARIS, Nr. 6, 1. Juni 1992 (1992-06-01), Seiten 92-96, XP000305761 ISSN: 0035-3116

## Beschreibung

### TECHNISCHES GEBIET

Die vorliegende Erfindung bezieht sich auf das Gebiet der Kraftwerkstechnik. Sie betrifft eine Kraftwerksanlage gemäss dem Oberbegriff des Anspruchs 1.

Eine solche Kraftwerksanlage ist z.B. aus dem Patent US-A-5,416,398 der Anmelderin bekannt.

Die Erfindung betrifft weiterhin ein Verfahren zum Betrieb einer solchen Kraftwerksanlage.

### STAND DER TECHNIK

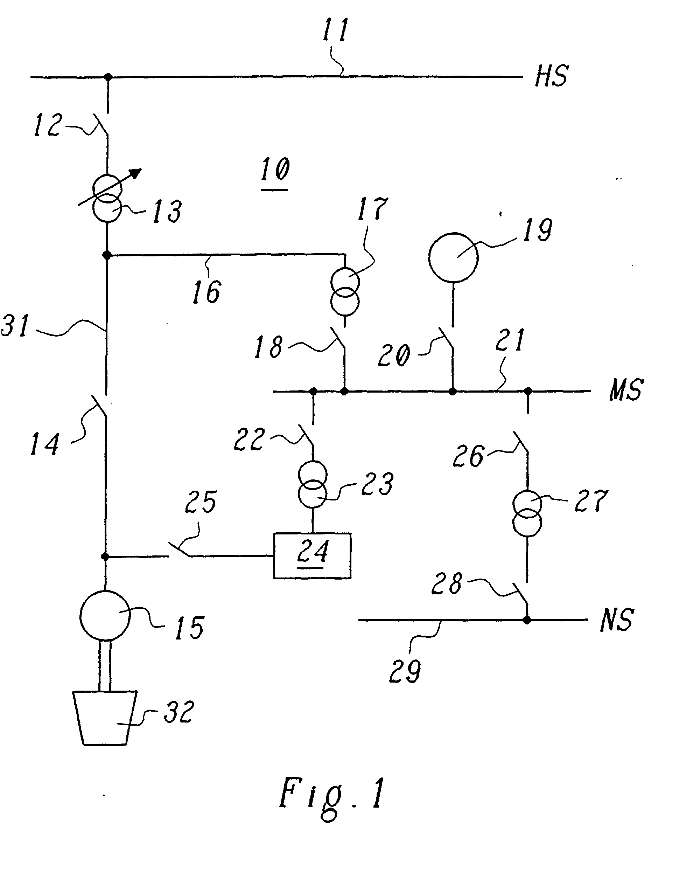

In der Fig. 1 ist ausschnittweise die elektrische Schaltung einer Kraftwerksanlage 10 dargestellt, wie sie aus dem Stand der Technik bekannt ist, und wie sie teilweise in der eingangs genannten Druckschrift beschrieben ist. Die bekannte Kraftwerksanlage 10 umfasst (wenigstens) eine Gasturbine 32, die über eine Welle mit einem elektrischen Generator 15 verbunden ist. Im Normalbetrieb erzeugt der von der Gasturbine angetriebene Generator 15 eine Wechselspannung, die über einen (dann geschlossenen) Generatorschalter 14, einen Busduct 31, einen mit einem Stufenschalter ausgestatteten (regelbaren) Step-up-Transformator 13 und einen Netzschalter 12 zur Uebertragung an Verbraucher in ein Hochspannungsnetz 11 (Hochspannung HS) eingespeist wird. Ein Teil der vom Generator 15 erzeugten Leistung wird vor dem Step-up-Transformator 13 vom Busduct 31 abgezweigt und über eine Verbindungsleitung 16, einen Eigenbedarfstransformator 17 und einen Schalter 18 auf ein Mittelspannungsnetz 21 (Mittelspannung MS) gegeben, das eine Eigenbedarfsspannung zur Deckung des Eigenbedarfs der Kraftwerksanlage 10 an elektrischer Leistung (für Speisewasserpumpen, Kühlwasserpumpen etc.) führt.

An das Mittelspannungsnetz 21 kann über einen weiteren Generatorschalter 20 ein Hilfsgenerator 19 (z.B. ein Dieselgenerator) angeschlossen werden, um in besonderen Fällen das Mittelspannungsnetz 21 für den Eigenbedarf mit Leistung zu versorgen. Mit dem Mittelspannungsnetz 21 ist über einen Mittelspannungsschalter 26, einen Niederspannungstransformator 27 und einen Niederspannungsschalter 28 ein Niederspannungsnetz 29 (Niederspannung NS) verbunden, aus dem beispielsweise Leistung für die Steuerung und Elektronik der Kraftwerksanlage entnommen werden kann.

Beim Anfahren der Kraftwerksanlage 10 muss die zunächst stehende Gasturbine 15 gestartet bzw. auf Zünddrehzahl hochgefahren werden. Für diesen Start bzw. das Hochfahren wird der Generator 15 als Antriebsmotor für die angekoppelte Gasturbine 32 verwendet. Die zur Versorgung des Generators/Motors 15 beim Hochfahren notwendige variable bzw. steuerbare Versorgungsspannung wird von einer statischen Starteinrichtung 24 bereitgestellt, die - wie in der eingangs genannten Druckschrift beschrieben - vorzugsweise als Frequenzumrichter ausgebildet ist, und eine Wechselspannung umrichtet, die über einen Schalter 22 und einen Transformator 23 aus dem Mittelspannungsnetz 21 entnommen wird. Die Eigenbedarfsspannung auf dem Mittelspannungsnetz 21 kann dabei in der Anfahrphase wahlweise über die Verbindungsleitung 16 aus dem Hochspannungsnetz 11 entnommen oder durch den Hilfsgenerator 19 bereitgestellt werden.

Im Normalbetrieb wird die Eigenbedarfsspannung auf dem Mittelspannungsnetz 21 über die Schaltungsteile 16, 17 und 18 vom Busduct 31 entnommen. Dies hat jedoch verschiedene Nachteile: Die Generatorspannung wird anhand des Blindleistungsbedarfs im Hochspannungsnetz und der dort aktuellen Spannung geregelt. Dadurch variiert auch die Spannung an der Mittelspannungsschiene bzw. auf dem Mittelspannungsnetz 21, da sie über die Schaltungsteile 18, 17 und 16 direkt mit mit dem Generator verbunden ist. Für die Spannungsschwankungen müssen alle elektrischen Verbraucher im Kraftwerk ausgelegt werden. Zusätzlich ist bei den üblichen Spannungstoleranzen in den Hochspannungsnetzen der Transformator 13 noch mit einem Stufenschalter und einer Regelung bzw. Steuerung auszustatten. Weiterhin ist für die Bereitstellung der Eigenbedarfsspannung auf dem Mittelspannungsnetz 21 ein zusätzlicher Abzweig notwendig, der aus der Verbindungsleitung 16, dem Eigenbedarfstransformator 17 und dem Schalter 18 besteht. Zusätzlich muss im Bereich des Eigenbedarfstransformators eine Brandschutzwand und eine Oelauffangwanne vorgesehen werden. Gleichzeitig macht der Abzweig einen relativ langen Busduct 31 notwendig. Schliesslich müssen - weil die Ausregelung der Spannungsschwankungen auf dem Busduct 31 nur grob möglich ist - alle elektrischen Betriebsmittel in der Kraftwerksanlage 10, die aus dem Mittelspannungsnetz 21 bzw. dem Niederspannungsnetz 29 versorgt werden, mit zusätzlichem Aufwand für eine vergleichsweise grosse Spannungstoleranz ausgelegt werden.

Die beiden Dokumente *Static starting device of gas turbines, Denesdi, ABB Review, Asea Brown Boveri, Zürich, Nr. 3, 1992, 33-38* und *Gatti et al., Digital control of load commutated inverters for starting equipment of gas turbine power stations, Proceedings Of The European Conference On Power Electronics And Applications, GB, London, IEE, Bd. Conf. 5, 250-255* beschreiben entsprechend der beschriebenen Figur 1 verschiedene Ausführungsformen, in welcher der Generator während des Starts der Gasturbine als Motor betrieben wird.

### DARSTELLUNG DER ERFINDUNG

Es ist daher Aufgabe der Erfindung, eine Kraftwerksanlage der eingangs genannten Art so zu konzipieren und zu betreiben, dass die aufgezählten Nachteile vermieden werden, und dass sich insbesondere in der Auslegung der Anlage wesentliche Vereinfachungen und Einsparungen ergeben.

Die Aufgabe wird durch die Gesamtheit der Merkmale des Anspruchs 1 gelöst. Der Kern der Erfindung besteht darin, dass Mittel zur Steuerung der statischen Starteinrichtung vorhanden sind, so dass die statische Starteinrichtung im Normalbetrieb nach dem Hochfahren der Gasturbine selbst die Eigenbedarfsspannung des Mittelspannungsnetzes aus der vom Generator abgegebenen Spannung erzeugt. Durch die Verwendung der statischen Starteinrichtung für die genannten verschiedenen Zwecke können nicht nur ganze Schaltungsteile der bisherigen Kraftwerksanlage eingespart werden, sondern es ergibt sich auch zugleich die Möglichkeit, auf einfache Weise die Eigenbedarfsspannung so zu stabilisieren bzw. auszuregeln, dass die elektrischen Betriebsmittel der Anlage mit geringerer Spannungstoleranz und damit weniger aufwendig ausgelegt werden können.

Eine erste bevorzugte Ausführungsform der erfindungsgemässen Kraftwerksanlage zeichnet sich dadurch aus, dass die statische Starteinrichtung als mit Leistungshalbleitern aufgebauter, in beiden Richtungen betreibbarer Umrichter ausgebildet ist. Dies hat den Vorteil, dass bewährte Schaltungen, z.B. Brückenschaltungen, mit bewährten Bauelementen wie z.B. Thyristoren eingesetzt werden können, die günstig aufzubauen sind und einen sicheren Betrieb gewährleisten.

Damit in der Startphase die notwendige Eigenbedarfsspannung für den als Motor betriebenen Generator ohne Einschränkung zur Verfügung steht, ist gemäss einer anderen bevorzugten Ausführungsform der Erfindung zur Erzeugung der Eigenbedarfsspannung des Mittelspannungsnetzes während des Hochfahrehs der Gas-turbine ein Hilfsgenerator, vorzugsweise ein Dieselgenerator, an das Mittelspannungsnetz anschliessbar.

Um den Einsatz von elektrischen Betriebsmitteln mit reduzierter Spannungstoleranz zu ermöglichen, sind gemäss einer weiteren bevorzugten Ausführungsform Mittel zur Steuerung der statischen Starteinrichtung vorgesehen, welche beim Normalbetrieb der Gasturbine die von der statischen Starteinrichtung erzeugte Eigenbedarfsspannung auf dem Mittelspannungsnetz konstant halten.

Das Verfahren zum Betrieb der Kraftwerksanlage gemäss dem Oberbegriff des Ansprüchs 6 zeichnet sich erfindungsgemäss dadurch aus, dass im Normalbetrieb nach dem Hochfahren der Gasturbine der Generatorschalter geschlossen wird und in allen Lastbereichen die Spannung des Mittelspannungsnetzes von der statischen Starteinrichtung aus der vom Generator abgegebenen Generatorspannung erzeugt wird.

Bevorzugt wird die beim Hochfahren der Gasturbine benötigte Eigenbedarfsspannung durch einen an das Mittelspannungsnetz angeschlossen Hilfsgenerator erzeugt, und der Hilfsgenerator nach Beendigung des Hochfahrens abgeschaltet.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einem Ausschnitt einen elektrischen Schaltungsplan einer Kraftwerksanlage mit Gasturbine und statischer Starteinrichtung nach dem Stand der Technik; und
- Fig. 2: einen Fig.1 entsprechenden Schaltungsplan gemäss einem bevorzugten Ausführungsbeispiel der Erfindung.

### WEGE ZUR AUSFÜHRUNG DER ERFINDUNG

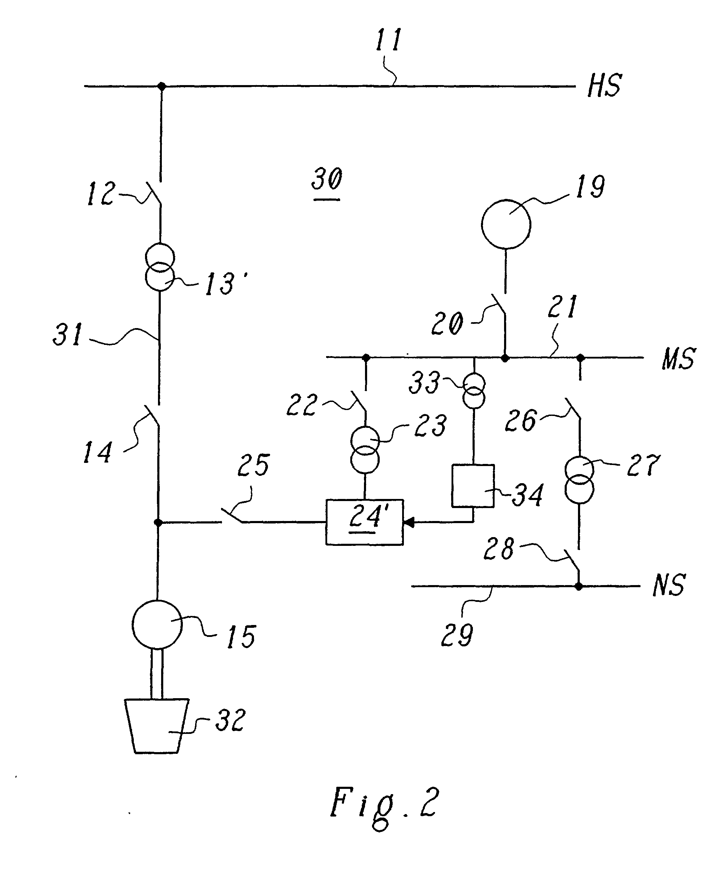

In Fig. 2 ist der zu Fig. 1 analoge Ausschnitt des elektrischen Schaltungsplans für eine Kraftwerksanlage 30 mit Gasturbine 15 wiedergegeben. Gegenüber dem Schaltungsplan aus Fig. 1 ergeben sich drei wesentliche Aenderungen:

Erstens fehlt der vom Busduct 31 zum Mittelspannungsnetz 21 führende Abzweig mit den Elementen 16, 17 und 18. Dies führt nicht nur zur Einsparung dieser Elemente mit allen Zusatzvorrichtungen wie Brandschutzwand und Oelauffangwanne sowie dem Kabel vom Eigenbedarfstransformator 17 zum Schalter 18, sondern ermöglicht auch eine Verkürzung des Busductes 31 zwischen dem Generator 15 und dem Step-up-Transformator 13'.

Zweitens ist die (in einer Richtung arbeitende) statische Starteinrichtung 24 aus Fig. 1 durch eine (in beiden Richtungen arbeitende) statische Starteinrichtung 24' ersetzt, welche die Versorgung des Mittelspannungsnetzes 21 mit Eigenbedarfsspannung übernimmt.

Drittens ist der Step-up-Transformator 13' im Unterschied zum Step-up-Transformator 13 aus Fig. 1 ohne Stufenschalter ausgeführt. Die Ausregelung von Spannungsschwankungen wird direkt von der statischen Starteinrichtung 24' übernommen, die dazu mit einer Steuerung 34 versehen ist, welche zum Abgreifen der Istspannung über einen Spannungstransformator 33 an das Mittelspannungsnetz 21 angeschlossen ist.

Die Kraftwerksanlage 30 wird so betrieben, dass zum Hochfahren der Gasturbine 32 zunächst der Generatorschalter 14 geöffnet gehalten und der Generator 15 als Antrieb für die Gasturbine 32 verwendet wird, wobei die vom Generator 15 benötigte Versorgungsspannung von der statischen Starteinrichtung 24' in ihrer ersten Betriebsart aus der Eigenbedarfsspannung des Mittelspannungsnetzes 21 erzeugt wird. Nach dem Hochfahren der Gasturbine 32 wird der Generatorschalter 14 geschlossen und die Eigenbedarfsspannung des Mittelspannungsnetzes 21 wird dann von der statischen Starteinrichtung 24' in ihrer zweiten Betriebsart aus der vom Generator 15 abgegebenen Generatorspannung erzeugt. Die von der statischen Starteinrichtung 24' erzeugte Eigenbedarfsspannung wird dabei durch eine entsprechende Ansteuerung der statischen Starteinrichtung 24' über die Steuerung 34 konstant gehalten. Die beim Hochfahren der Gasturbine 32 benötigte Eigenbedarfsspannung wird vorzugsweise durch einen an das Mittelspannungsnetz 21 angeschlossen Hilfsgenerator 19 erzeugt. Der Hilfsgenerator 19 wird nach Beendigung des Hochfahrens abgeschaltet.

Insgesamt ergeben sich mit der Erfindung die folgenden Vorteile:
- der Stufenschalter im Step-up-Transformator wird eingespart
- der Abzweig vom Busduct zum Eigenbedarfstransformator wird eingespart
- der Eigenbedarfstransformator wird eingespart
- der Busduct zwischen dem Generator und dem Step-up-Transformator wird kürzer
- eine Brandschutzwand und eine Oelauffangwanne beim Eigenbedarfstransformator wird eingespart
- das Kabel vom Eigenbedarfstransformator zum Schalter am Mittelspannungsnetz wird eingespart
- die elektrischen Betriebsmittel in der Kraftwerksanlage können mit weniger Aufwand für eine geringere Spannungstoleranz ausgelegt werden
- durch die Bereitstellung der Energie für den elektrischen Eigenbedarf via statische Starteinrichtung kann die Eigenbedarfsspannung unabhängig von der Generatorspannung konstant gehalten werden.

### BEZUGSZEICHENLISTE

- 10,30: Kraftwerksanlage
- 11: Hochspannungsnetz
- 12: Netzschalter
- 13,13': Step-up-Transformator
- 14: Generatorschalter
- 15: Generator
- 16: Verbindungsleitung (Eigenbedarf)
- 17: Eigenbedarfstransformator
- 18: Schalter (Eigenbedarf)
- 19: Hilfsgenerator
- 20: Generatorschalter (Hilfsgenerator)
- 21: Mittelspannungsnetz
- 22,25: Schalter (SSD)
- 23: Transformator (SSD)
- 24,24': statische Starteinrichtung (SSD)
- 26: Mittelspannungsschalter
- 27: Niederspannungstransformator
- 28: Niederspannungsschalter
- 29: Niederspannungsnetz
- 31: Busduct
- 32: Gasturbine
- 33: Spannungstransformator
- 34: Steuerung

## Patentansprüche

1. Kraftwerksanlage (30), umfassend eine Gasturbine (32), welche mit einem elektrischen Generator (15) gekoppelt ist, der über einen Generatorschalter (14) mit einem Hochspannungsnetz (11) verbindbar ist, und der für das Hochfahren der Gasturbine (32) als Motor betrieben werden kann und für das Hochfahren der Gasturbine (32) mit einer statischen Starteinrichtung (24') verbindbar ist, welche an ein für den Eigenbedarf der Kraftwerksanlage (30) vorgesehenes Mittelspannungsnetz (21) angeschlossen ist und aus der anderweitig bereitgestellten Eigenbedarfsspannung des Mittelspannungsnetzes (21) eine variable Versorgungsspannung für den als Motor betriebenen Generator (15) erzeugt,
**dadurch gekennzeichnet, dass**
Mittel (33, 34) zur Steuerung der statischen Starteinrichtung (24') vorhanden sind, so dass die statische Starteinrichtung (24') im Normalbetrieb nach dem Hochfahren der Gasturbine (32) selbst die Eigenbedarfsspannung des Mittelspannungsnetzes (21) aus der vom Generator (15) abgegebenen Spannung erzeugt.

2. Kraftwerksanlage nach Anspruch 1, **dadurch gekennzeichnet, dass** die statische Starteinrichtung (24') als mit Leistungshalbleitern aufgebauter, in beiden Richtungen betreibbarer Umrichter ausgebildet ist.

3. Kraftwerksanlage nach einem der Ansprüche 1 und 2, **dadurch gekennzeichnet, dass** zur Erzeugung der Eigenbedarfsspannung des Mittelspannungsnetzes (21) während des Hochfahrens der Gasturbine eine Hilfsgenerator (19), vorzugsweise ein Dieselgenerator, an das Mittelspannungsnetz (21) anschliessbar ist.

4. Kraftwerksanlage nach einem der Ansprüche 1 bis 3, **dadurch gekennzeichnet, dass** die statische Starteinrichtung (24') über einen Transformator (23) und einen Schalter (22) an das Mittelspannungsnetz (21) angeschlossen ist.

5. Kraftwerksanlage nach einem der Ansprüche 1 bis 4, **dadurch gekennzeichnet**, das die Mittel (33, 34) zur Steuerung der statischen Starteinrichtung (24') beim Normalbetrieb der Gasturbine (32) die von der statischen Starteinrichtung (24') erzeugte Eigenbedarfsspannung auf dem Mittelspannungsnetz (21) konstant halten.

6. Verfahren zum Betrieb einer Kraftwerksanlage (30), wobei die Kraftwerksanlage (30) eine Gasturbine (32) umfasst, welche mit einem elektrischen Generator (15) gekoppelt ist, welcher Generator (15) über einen Generatorschalter (14) mit einem Hochspannungsnetz (11) verbindbar ist, wobei zum Hochfahren der Gasturbine (32) der Generatorschalter (14) geöffnet wird und der Generator (15) als Motor für die Gasturbine (32) verwendet wird, und für das Hochfahren der Gasturbine (32) mit einer statischen Starteinrichtung (24') verbunden wird, welche an ein für den Eigenbedarf der Kraftwerksanlage (30) vorgesehenes Mittelspannungsnetz (21) angeschlossen ist, und wobei Mittel (33, 34) zur Steuerung der statischen Starteinrichtung (24') vorhanden sind,
**dadurch gekennzeichnet, dass**
im Normalbetrieb nach dem Hochfahren der Gasturbine (32) der Generatorschalter (14) geschlossen wird und die Mittel (33, 34) zur Steuerung der statischen Starteinrichtung (24') die Starteinrichtung so steuern, dass in allen Lastbereichen die Spannung des Mittelspannungsnetzes (21) von der statischen Starteinrichtung (24') aus der vom Generator (15) abgegebenen Generatorspannung erzeugt wird.

7. Verfahren nach Anspruch 6, **dadurch gekennzeichnet, dass** die beim Hochfahren der Gasturbine (32) benötigte Eigenbedarfsspannung durch einen an das Mittelspannungsnetz (21) angeschlossen Hilfsgenerator (19) erzeugt wird, und dass der Hilfsgenerator (19) nach Beendigung des Hochfahrens abgeschaltet wird.

8. Verfahren nach einem der Ansprüche 6 und 7, **dadurch gekennzeichnet, dass** nach dem Hochfahren der Gasturbine (32) im Normalbetrieb die von der statischen Starteinrichtung (24') erzeugte Eigenbedarfsspannung durch eine entsprechende Ansteuerung der statischen Starteinrichtung (24') konstant gehalten wird.

## Claims

1. Power plant (30) comprising a gas turbine (32), which is coupled to an electric generator (15), which can be connected to a high-voltage network (11) via a generator switch (14) and can be operated as a motor for the run-up of the gas turbine (32) and can be connected to a static starting device (24') for the run-up of the gas turbine (32), which static starting device (24') is connected to a medium-voltage network (21) provided for the auxiliaries service of the power plant (30) and, from the auxiliaries voltage, provided in another way, of the medium-voltage network (21), produces a variable supply voltage for the generator (15) operated as a motor, **characterized in that** means (33, 34) of controlling the static starting device (24') are present, so that the static starting device (24'), during normal operation, produces the auxiliaries voltage of the medium-voltage network (21), itself, after the run-up of the gas turbine (32), from the voltage delivered by the generator (15).

2. Power plant according to Claim 1, **characterized in that** the static starting device (24') is designed as a converter which is constructed with power semiconductors and can be operated in both directions.

3. Power plant according to either of Claims 1 and 2, **characterized in that**, to produce the auxiliaries voltage of the medium-voltage network (21) during the run-up of the gas turbine, an auxiliary generator (19), preferably a diesel generator, can be connected to the medium-voltage network (21).

4. Power plant according to one of Claims 1 to 3, **characterized in that** the static starting device (24') is connected to the medium-voltage network (21) via a transformer (23) and a switch (22).

5. Power plant according to one of Claims 1 to 4, **characterized in that** the means (33, 34) for controlling the static starting device (24'), during normal operation of the gas turbine (32), keep the auxiliaries voltage produced by the static starting device (24') on the medium-voltage network (21) constant.

6. Method of operating a power plant (30), the power plant (30) comprising a gas turbine (32), which is coupled to an electric generator (15), which can be connected to a high-voltage network (11) via a generator switch (14), the generator switch (14) being opened for the run-up of the gas turbine (32), and the generator (15) being used as a motor for the gas turbine (32) and being connected to a static starting device (24') for the run-up of the gas turbine (32), which static starting device (24') is connected to a medium-voltage network (21) provided for the auxiliaries service of the power plant (30), and means (33, 34) of controlling the static starting device (24') being present, **characterized in that**, during normal operation, after the run-up of the gas turbine (32), the generator switch (14) is closed, and the means (33, 34) of controlling the static starting device (24') control the starting device in such a way that, in all the load ranges, the voltage of the medium-voltage network (21) is produced by the static starting device (24') from the generator voltage delivered by the generator (15).

7. Method according to Claim 6, **characterized in that** the auxiliaries voltage required during the run-up of the gas turbine (32) is produced by an auxiliary generator (19) connected to the medium-voltage network (21), and **in that** the auxiliary generator (19) is shut down after the run-up has been completed.

8. Method according to either of Claims 6 and 7, **characterized in that**, after the run-up of the gas turbine (32), the auxiliaries voltage produced by the static starting device (24') is kept constant during normal operation by appropriate activation of the static starting device (24').

## Revendications

1. Centrale électrique (30) comprenant une turbine à gaz (32) qui est accouplée à un générateur électrique (15) pouvant être connecté par le biais d'un commutateur de générateur (14) à un réseau haute tension (11), et pouvant être entraîné comme moteur pour la mise en marche de la turbine à gaz (32) et pouvant être connecté pour la mise en marche de la turbine à gaz (32) à un dispositif de démarrage statique (24'), lequel est raccordé à un réseau moyenne tension (21) prévu pour les besoins propres de la centrale électrique (30) et produit, à partir de la tension pour les besoins propres du réseau de moyenne tension (21) mise à disposition pour un autre emploi, une tension d'alimentation variable pour le générateur (15) fonctionnant comme moteur,
**caractérisée en ce que**
des moyens (33, 34) pour la commande du dispositif de démarrage statique (24') sont prévus de telle sorte que le dispositif de démarrage statique (24') produise, en fonctionnement normal après la mise en marche de la turbine à gaz (32) lui-même la tension pour les besoins propres du réseau moyenne tension (21) à partir de la tension délivrée par le générateur (15).

2. Centrale électrique selon la revendication 1,
**caractérisée en ce que** le dispositif de démarrage statique (24') est réalisé sous la forme d'un onduleur fonctionnant dans les deux sens, construit avec des semi-conducteurs de puissance.

3. Centrale électrique selon l'une quelconque des revendications 1 et 2, **caractérisée en ce que** pour la génération de la tension pour les besoins propres du réseau moyenne tension (21) pendant la mise en marche de la turbine à gaz, un générateur auxiliaire (19), de préférence un générateur diesel, peut être raccordé au réseau moyenne tension (21).

4. Centrale électrique selon l'une quelconque des revendications 1 à 3, **caractérisée en ce que** le dispositif de démarrage statique (24') est raccordé par le biais d'un transformateur (23) et d'un commutateur (22) au réseau moyenne tension (21).

5. Centrale électrique selon l'une quelconque des revendications 1 à 4, **caractérisée en ce que** les moyens (33, 34) pour la commande du dispositif de démarrage statique (24'), lors du fonctionnement normal de la turbine à gaz (32), maintiennent constante la tension pour les besoins propres générée par le dispositif de démarrage statique (24') sur le réseau moyenne tension (21).

6. Procédé pour faire fonctionner une centrale électrique (30), dans lequel la centrale électrique (30) comprend une turbine à gaz (32), qui est accouplée à un générateur électrique (15), lequel générateur (15) peut être connecté par le biais d'un commutateur de générateur (14) à un réseau haute tension (11), le commutateur de générateur (14) étant ouvert pour la mise en marche de la turbine à gaz (32) et le générateur (15) étant utilisé en tant que moteur pour la turbine à gaz (32), et, pour la mise en marche de la turbine à gaz (32), étant connecté à un dispositif de démarrage statique (24') qui est raccordé à un réseau moyenne tension (21) prévu pour les besoins propres de la centrale électrique (30), et des moyens (33, 34) étant prévus pour la commande du dispositif de démarrage statique (24'),
**caractérisé en ce que**,
en fonctionnement normale, après la mise en marche de la turbine à gaz (32), le commutateur de générateur (14) est fermé et les moyens (33, 34) pour la commande du dispositif de démarrage statique (24') commandent le dispositif de démarrage de telle sorte que dans tous les domaines de charge, la tension du réseau moyenne tension (21) soit générée par le dispositif de démarrage statique (24') à partir de la tension du générateur délivrée par le générateur (15).

7. Procédé selon la revendication 6, **caractérisé en ce que** la tension pour les besoins propres nécessaire lors de la mise en marche de la turbine à gaz (32) est générée par un générateur auxiliaire (19) raccordé au réseau moyenne tension (21), et **en ce que** le générateur auxiliaire (19) est déconnecté à la fin de la mise en marche.

8. Procédé selon l'une quelconque des revendications 6 et 7, **caractérisé en ce qu'**après la mise en marche de la turbine à gaz (32), en fonctionnement normal, la tension pour les besoins propres générée par le dispositif de démarrage statique (24') est maintenue constante par une commande correspondante du dispositif de démarrage statique (24').
